(19) **Europäisches Patentamt**

**European Patent Office**

**Office européen des brevets**

(11) **EP 0 854 587 B1**

(12) **EUROPÄISCHE PATENTSCHRIFT**

(45) Veröffentlichungstag und Bekanntmachung des Hinweises auf die Patenterteilung:
**25.08.2004 Patentblatt 2004/35**

(51) Int Cl.[7]: **H04B 3/54**

(21) Anmeldenummer: **97100885.9**

(22) Anmeldetag: **21.01.1997**

(54) **Verfahren und Einrichtung zum übertragerlosen Ankoppeln einer Teilnehmerstation an einem Bus**

Method and device for transformerless coupling of a subscriber to a bus

Procédé et dispositif de couplage sans transformateur d'un abonné à un bus

(84) Benannte Vertragsstaaten:
**AT BE CH DE DK ES FR GB IT LI NL**

(43) Veröffentlichungstag der Anmeldung:
**22.07.1998 Patentblatt 1998/30**

(73) Patentinhaber: **SIEMENS AKTIENGESELLSCHAFT**
**80333 München (DE)**

(72) Erfinder: **Zierhut, Hermann**
**93073 Neutraubling (DE)**

(56) Entgegenhaltungen:
**EP-A- 0 250 035        WO-A-96/02982**

**Beschreibung**

Die Erfindung bezieht sich auf ein Verfahren und auf eine Einrichtung zum Ankoppeln einer Teilnehmerstation an einem Bus, eines Bussystems, der Informationen und Energie führt, wobei mit Aktivimpuls und Ausgleichsimpuls bei der Informationsübertragung gearbeitet wird, im einzelnen nach Gattungsbegriff von Patentanspruch 1 bzw. nach Patentanspruch 4. Hierbei dient eine Konstantstromquelle für Frequenzen der Nachricht als Weiche für Information und Energie, die bei niedrigen Frequenzen in Verbindung mit einer Ansteuerung als Regelschaltung arbeitet, nachstehend insgesamt als Konstantstromquelle bezeichnet. Eine derartige Konstantstromquelle ist in WO 96/02982 beschrieben. Man erzielt dadurch eine übertragerlose Ankopplung.

Der Erfindung liegt die Aufgabe zugrunde, ein Verfahren anzugeben und eine Einrichtung zu entwikkeln, die eine übertragerlose Ankopplung hinsichtlich des Übertragungsverhaltens des Bussystems vervollkommnet.

Die Lösung der geschilderten Aufgabe erfolgt durch ein Verfahren nach Anspruch 1. Die Ansteuerung der Konstantstromquelle-erfolgt derart, daß nach dem Aktivimpuls der Quellenstrom als Ausgleichsimpuls so reduziert wird, daß der Entmagnetisierungsstrom eines Übertragers nachgebildet wird. Hierdurch erzielt man den Vorteil, daß die Ausgleichsimpulse, die man für eine gute Nachrichtenübertragung als wünschenswert erkannt hat, auch bei Einsatz einer Konstantstromquelle anstelle eines Übertragers dem Entmagnetisierungsstrom eines Übertragers nachbilden kann.

Die Lösung der geschilderten Aufgabe erfolgt weiter durch einen Busankoppler nach Anspruch 4. Die Ansteuerung der Konstantstromquelle erfolgt hiernach durch eine Schaltung, die derart arbeitet, daß nach dem Aktivimpuls der Quellenstrom so reduziert wird, daß der Entmagnetisierungsstrom eines Übertragers nachgebildet ist.

Zur Bildung des Ausgleichsimpulses kann vorteilhaft in die Ansteuerung der Konstantstromquelle, von einer Ansteuerschaltung aus, eine Summierschaltung eingeschaltet sein, der auch das Steuersignal von einer Einrichtung zur Nachbildung eines Ausgleichsimpulses zugeführt ist. Diese Einrichtung zur modellhaften Nachbildung eines Ausgleichsimpulses kann der Wirkung nach ein Transistor mit Emitterwiderstand und mit Kondensator sein, dem eine Entladeschaltung zugeordnet ist, im einzelnen nach Anspruch 6. Am Kollektor kann das Steuersignal abgenommen werden, wobei der Basis des Transistors eine der Busspannung proportionale Spannung zugeführt ist. Hierdurch erzielt man mit einfachen Mitteln eine modellhafte Nachbildung des Ausgleichsimpulses durch ein Steuersignal, das dem Signal von der Ansteuerschaltung zur Konstantstromquelle durch Überlagerung in der Konstantstromquelle einen geeigneten Ausgleichsimpuls bildet.

Der Quellenstrom während des Ausgleichsimpulses ist dabei vorteilhaft um einen gedachten Strom I zu reduzieren, gemäß der Beziehung

$$I = \int_{t0}^{t1} \Delta U \cdot dt \, ,$$

wobei t0 der Beginn der Aktivimpulses und t1 das Ende des Aktivimpulses ist.

Insbesondere kann der Kondensator in der Einrichtung zur Nachbildung des Ausgleichsimpulses am Kollektor angeordnet sein und man kann der Basis des Transistors die Busspannung zuführen, beispielsweise kapazitiv einkoppeln.

Die Entladeschaltung, die parallel am Kondensator der Einrichtung zur Nachbildung des Ausgleichsimpulses angeschlossen sein kann, ist nach einer Weiterbildung dafür eingerichtet, etwa über die halbe Zeitdauer des Aktivimpulses die Ladung des Kondensators zu halten und danach etwa über die gleiche Zeitdauer zu entladen, um ein besonders vorteilhaftes Steuersignal bereitzustellen. Mit diesem Steuersignal erzielt man in Überlagerung der Ansteuerung der Konstantstromquelle vorteilhafte Ausgleichsimpulse, die besonders günstiges Übertragungsverhalten des Busses ergeben.

Die Erfindung soll nun anhand von in der Zeichnung grob schematisch wiedergegebenen Ausführungsbeispielen näher erläutert werden.

In FIG 1 ist ein Busankoppler mit einer Konstantstromquelle, einer Summierschaltung und einer Einrichtung zur Nachbildung eines Ausgleichsimpulses veranschaulicht.

In FIG 2 ist ein Ausführungsbeispiel für eine Einrichtung zur Nachbildung eines Ausgleichsimpulses wiedergegeben.

In FIG 3 ist ein Spannungs-Zeit-Diagramm wiedergegeben, in dem eine obere Kurve den Spannungsverlauf während eines Aktivimpulses und während eines anschließenden Ausgleichsimpulses wiedergibt und eine untere Kurve die Spannung am Kondensator bzw. der Kapazität der Einrichtung zur Nachbildung des Ausgleichsimpulses wiedergibt.

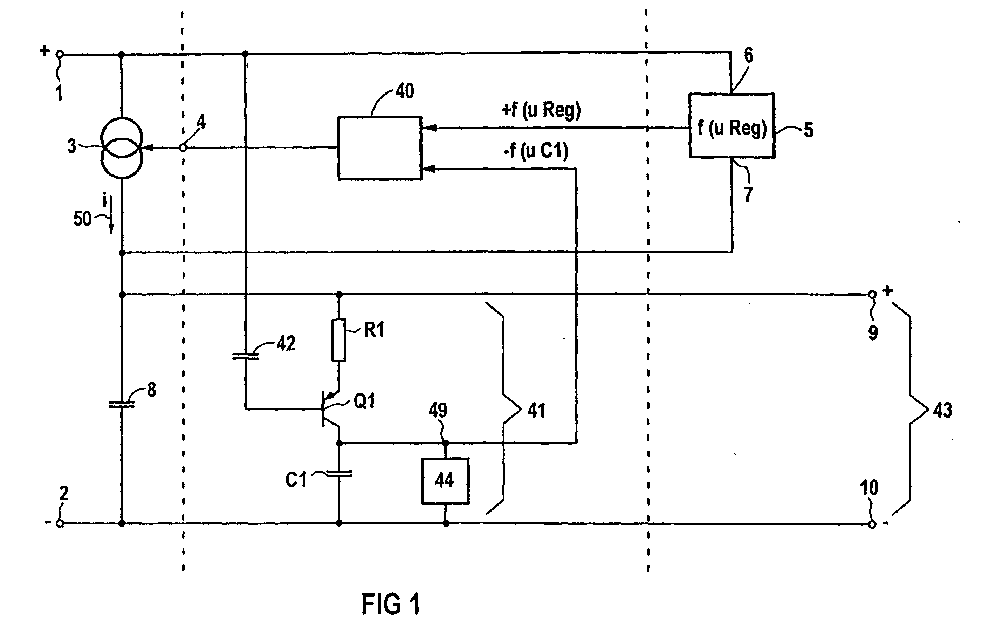

Die Schaltung nach FIG 1 eignet sich zur Durchführung des Verfahrens zum übertragerlosen Ankoppeln. Der Busankoppler ist an einem Bus mit den Busleitern 1,2 angeschlossen. Beispielsweise führt der obere Bus positives Potential und der untere Bus negatives Potential bzw. Erde. Die Ankoppelschaltung weist eine Konstantstromquelle 3 mit einem Steuereingang 4 auf. Der Steuereingang 4 steht der Wirkung nach mit einer Ansteuerschaltung 5 in Verbindung. Im Ausführungsbeispiel erfolgt die Verbindung über eine Summierschaltung 40. Die Ansteuerschaltung 5 weist Eingänge 6,7 für ein Regelkriterium auf. Die zusammenfassend Konstantstromquelle 3 genannte Einrichtung ist derart aufgebaut und dimensioniert, daß sie in der Arbeitsweise einer Konstantstromquelle für Frequenzen der Nachricht zu betreiben ist. Die Frequenzen der Nachricht sind als überlagerte Wechselsignale auf einem Gleichspannungspotential des Busses übertragen. Für niedrigere Frequenzen arbeitet die Konstantstromquelle 3 in Verbindung mit der Ansteuerschaltung 5 als Regelschaltung. Die Konstantstromquelle 3 ist der Wirkung nach mit einem Speicherkondensator 8 verbunden, an dem die Bordnetzspannung als Gleichspannung an den Versorgungsschienen 9 und 10 abgenommen werden kann.

Die Serienschaltung aus Konstantstromquelle 3 und Speicherkondensator 8 ist der Wirkung nach an den Busleitern 1 und 2 angeschlossen. Über die Versorgungsschienen 9 und 10 kann einem Busankoppler die Bordnetzspannung zugeführt werden. Die Einrichtung zum Bereitstellen der Bordnetzspannung kann Teil des Busankopplers sein. Die Energie für die Bordnetzversorgung wird in besonders wirtschaftlicher Weise verlustarm gewonnen.

Die höchste Regelfrequenz ist vorteilhaft tiefer als die niedrigste Übertragungsfrequenz eingestellt, so daß sichergestellt ist, daß der Widerstand der Konstantstromquelle 3 und damit des Busankopplers, für die Bordnetzversorgung hinreichend niedrig ist und für die Nachrichtensignale ausreichend groß ist. Die Nachricht auf dem Bus wird dadurch durch die Bordnetzversorgung nicht bedämpft. Andererseits wird die Energie für die Bordnetzversorgung in besonders wirtschaftlicher Weise verlustarm gewonnen. In der Praxis ist es vorteilhaft, die höchste Regelfrequenz tiefer als 1/10 der niedrigsten Übertragungsfrequenz einzustellen. Ein derartiger Aufbau ermöglicht die Ausbildung in einem integrierten Schaltkreis, also in einem IC. Einzelheiten des Aufbaus einer geeigneten Konstantstromquelle sind der WO 96/02982 zu entnehmen.

Der Summierschaltung 40 wird außer dem Signal f(u Reg) von der Ansteuerschaltung 5 ein Steuersignal f (u C1) der Einrichtung 41 zur Nachbildung des Ausgleichsimpulses eines Übertragers zugeführt.

Die Einrichtung 41 zur Nachbildung des Ausgleichsimpulses besteht im Ausführungsbeispiel der Wirkung nach aus einem Transistor Q1 mit Emitterwiderstand R1 und Kondensator C1, der am Kollektor ausgebildet ist. Der Transistor Q1 kann durch geeignete Dotierung in einem Halbleiterbereich eines IC's gebildet sein. Ebenso kann man die weiteren Bauelemente bilden. Der Kondensator C1 ist am Kollektor des Transistors Q1 ausgebildet und dient als Speicherkondensator für das Ausgleichssignal. An die Basis des Transistors Q1 ist im Ausführungsbeispiel die Busspannung über einen Koppelkondensator 42 eingekoppelt.

Wenn der Kondensator C1 mittels des Transistors Q1 über den Emitterwiderstand R1 aufgeladen wird, erfolgt eine integrierende Multiplikation während des Aktivimpulses auf dem Bus, gemäß

$$\overline{I} = \int_{t0}^{t1} \Delta U \cdot dt,$$

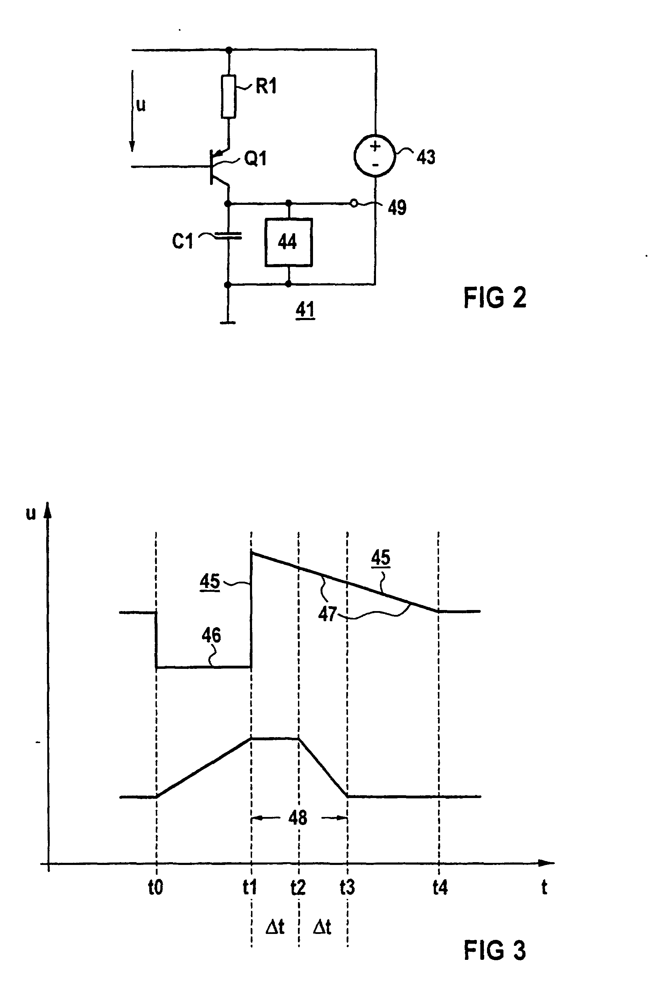

wobei t0 dem Beginn und t1 dem Ende des Aktivimpulses entspricht. Der Kondensator C1 ist also dafür ausgelegt, eine integrierende Multiplikation während des Aktivimpulses durchzuführen. An der Basis des Transistors steht die Spannung des Aktivimpulses auf dem Bus an. Sie wirkt ggf. um die Größe der Basis-Emitter-Spannung vermindert ein. Bei herkömmlichen Transistoren wäre mit einer Spannungsminderung um 0,7 V zu rechnen. Parallel zum Kondensator C1 ist eine Entladeschaltung 44 ausgebildet, die den Kondensator C1 nach einem Aktivimpuls mit einer Zeitkonstanten und mit einem verhalten entlädt, das dem zu ersetzenden Übertrager modellhaft entspricht. Der Gesamtverlauf der Kurve 45 in FIG 3 veranschaulicht die Spannung an der Basis des Transistors Q1 während eines Aktivimpulses 46 und eines Ausgleichsimpulses 47 auf dem Bus. Am Kondensator C1 bzw. an der Kapazität eines entsprechend dotierten Halbleiterbereichs entsteht eine Spannung entsprechend der unteren Kurve im Diagramm nach FIG 3. Im Zusammenwirken mit der Entladeschaltung 44 entsteht beispielsweise ein Spannungsverlauf 48 während des Ausgleichsimpulses. Diese Spannung kann als Steuersignal f(u C1) der Summierschaltung 40 zugeführt werden, wo sie im Ausführungsbeispiel vom Signal f(u Reg), als über die Zeit verändertem Signal, subtrahiert wird. Der Kurvenverlauf 48 nach FIG 3 entspricht einer besonders vorteilhaften Spannung des Steuersignals f(u C1). Am Ende des Aktivimpulses wird danach während einer Zeitdauer Δt die Ladung des Kondensators C1 durch die Entladeschaltung 44 gehalten und danach der Kondensator C1 in etwa der gleichen Zeitdauer Δt entladen. Ein derartiges Signal ist für die Übertragungseigenschaften des Busses besonders günstig.

In FIG 2 ist eine Einrichtung 41 zur Nachbildung des Ausgleichsimpulses für sich veranschaulicht. Die Bordnetzspannung 43 ist als Bordnetzgenerator veranschaulicht. Ein Emitterwiderstand R1 ist am Emitter eines Transistors Q1 ausgebildet und in Reihe zum Emitterwiderstand R1 und den Transistor Q1 ist am Kollektor ein Kondensator C1 ausgebildet. Parallel zum Kondensator C1 ist eine Entladeschaltung 44 ausgebildet. Eine Busspannung ist mit u veranschaulicht. Die diskret wiedergegebenen Bauelemente können als Dotierungsbereiche in einem Halbleitermaterial verstanden werden. An einem Anschluß 49 kann ein Steuersignal zur Nachbildung eines Ausgleichsimpulses abgenommen werden. Die Einrichtung 41 zur Nachbildung des Ausgleichsimpulses kann in einem integrierten Schaltkreis gesondert ausgebildet sein oder als Teilbereich in einem integrierten Schaltkreis für einen Busankoppler, wie er in FIG 1 grob schematisch veranschaulicht ist.

**Patentansprüche**

1.  Verfahren zum Ankoppeln einer Teilnehmerstation an einem Bus (1,2), eines Bussystems, der Informationen und Energie führt, wobei mit Aktivimpuls (46) und Ausgleichsimpuls (47) bei der Informationsübertragung gearbeitet wird, und mit einer Konstantstromquelle (3) für Frequenzen der Nachricht als Weiche für Informationen und Energie, die bei niedrigen Frequenzen in Verbindung mit einer Ansteuerschaltung (5), die ein Signal (f(u Reg)) zur Ansteuerung der Konstantstromquelle (3) liefert, als Regelschaltung arbeitet, **dadurch gekennzeichnet, daß** die Ansteuerung der Konstantstromquelle (3) nach dem Aktivimpuls (46) derart erfolgt, daß der Quellenstrom (50) als Ausgleichsimpuls so reduziert wird, daß der Endmagnetisierungsstrom eines Übertragers nachgebildet wird.

2.  Verfahren nach Anspruch 1, **dadurch gekennzeichnet, daß** die Nachbildung des Ausgleichsimpulses eines Übertragers mittels eines Steuersignals (f(u C1)) erfolgt, das dem Signal (f(u Reg)) zur Ansteuerung der Konstantstromquelle (3) überlagert wird.

3.  Busankoppler, der mit einem Aktivimpuls (46) und einem Ausgleichsimpuls (47) arbeitet, zum Ankoppeln an einen Information und Energie führenden Bus eines Bussystems, wobei der Busankoppler mit einer Konstantstromquelle (3) für Frequenzen der Nachricht als Weiche für Information und Energie arbeitet, die bei niedrigen Frequenzen in Verbindung mit einer Ansteuerschaltung (5) als Regelschaltung arbeitet, **dadurch gekennzeichnet, daß** die Ansteuerung der Konstantstromquelle (3) durch eine Schaltung erfolgt, die derart ausgelegt ist, daß nach dem Aktivimpuls (46) der Quellenstrom (50) als Ausgleichsimpuls so reduziert wird, daß der Magnetisierungsstrom eines Übertragers nachgebildet ist.

4.  Busankoppler nach Anspruch 3, **dadurch gekennzeichnet, daß** in die Ansteuerung der Konstantstromquelle (3), von der Ansteuerschaltung (5) aus, eine Summierschaltung (40) eingeschaltet ist, der auch ein Steuersignal (-f(u C1)) von einer Einrichtung (41) zur Nachbildung des Ausgleichsimpulses zugeführt ist.

5.  Busankoppler nach Anspruch 4, **dadurch gekennzeichnet, daß** die Einrichtung (41) zur Nachbildung des Ausgleichsimpulses der Wirkung nach ein Transistor (Q1) mit Emitterwiderstand (R1) und Kondensator (C1) ist, dem eine Entladeschaltung (44) zugeordnet ist, wobei am Kollektor das Steuersignal (f(u C1)) abnehmbar ist, wobei der Basis des Transistors (Q1) eine der Busspannung proportionale Spannung zugeführt ist.

6.  Busankoppler nach Anspruch 4, **dadurch gekennzeichnet, daß** die Einrichtung (41) zur Nachbildung des Ausgleichsimpulses der Wirkung nach ein Transistor (Q1) mit Emitterwiderstand (R1) und Kondensator (C1) am Kollektor ist, wobei dem Kondensator (C1) eine Entladeschaltung (44) parallel geschaltet ist und zwischen Kollektor und Kondensator das Steuersignal (f(u C1)) abnehmbar ist, wobei der Basis des Transistors (Q1) die Busspannung (u) zugeführt ist.

7.  Busankoppler nach Anspruch 5 oder 6, **dadurch gekennzeichnet, daß** die Entladeschaltung (44) dafür eingerichtet ist, etwa über die halbe Zeitdauer des Aktivimpulses die Ladung des Kondensators (C1) zu halten und danach etwa über die gleiche Zeitdauer zu entladen.

**Claims**

1.  A method for coupling a subscriber station to a bus (1, 2) of a bus system, said bus carrying information and energy, wherein active pulses (46) and equalizing pulses (47) are used for the information transmission, and having a constant current source (3) for frequencies of the message as a switch for information and energy which operates at low frequencies in conjunction with a driving circuit (5) which supplies a signal (f(u Reg)) for controlling the constant current source (3) and operates as a regulating circuit, **characterized in that** the control of the constant current source (3) takes place after the active pulse (46) in such a way that the source current (50) is reduced as an equalizing pulse such that the demagnetisation current of a transformer is simulated.

2.  The method as claimed in claim 1, **characterized in that** the equalizing pulse of a transformer is simulated by means of a control signal (f(u C1)) which is superimposed on the signal (f(u Reg)) for controlling the constant current source (3).

3.  A bus coupler which operates with an active pulse (46) and an equalising pulse (47) for coupling to an information and energy carrying bus of a bus system, wherein the bus coupler operates with a constant current source (3) for frequencies of the message as a switch for information and energy which operates at low frequencies in conjunction with a driving circuit (5) as a regulating circuit, **characterized in that** the control of the constant current source (3) takes place by means of a circuit which is configured in such a way that after the active pulse (46) the source current (50) is reduced as an equalizing pulse such that the demagnetisation current of a transformer is simulated.

4. The bus coupler as claimed in claim 4, **characterized in that** a summation circuit (40) is inserted into the control arrangement of the constant current source (3), starting from the standpoint of the driving circuit (5), to which summation circuit a control signal (-f(u C1)) is also supplied by a device (41) for simulating the equalizing pulse.

5. The bus coupler as claimed in claim 4, **characterized in that** in terms of its effect the device (41) for simulating the equalizing pulse is a transistor (Q1) with emitter resistance (R1) and capacitor (C1), to which a discharge circuit (44) is assigned, whereby the control signal (f(u C1)) can be picked up at the collector, whereby a voltage proportional to the bus voltage is supplied to the base of the transistor (Q1).

6. The bus coupler as claimed in claim 4, **characterized in that** in terms of its effect the device (41) for simulating the equalizing pulse is a transistor (Q1) with emitter resistance (R1) and capacitor (C1) at the collector, whereby a discharge circuit (44) is connected in parallel with the capacitor (C1) and the control signal (f(u C1)) can be picked up between collector and capacitor, whereby the bus voltage (u) is supplied to the base of the transistor (Q1).

7. The bus coupler as claimed in claim 5 or 6, **characterized in that** the discharge circuit (44) is set up so as to hold the charge of the capacitor (C1) for approximately half the duration of the active pulse and subsequently to discharge approximately over the same duration.


**Revendications**

1. Procédé pour le couplage d'un poste d'abonné à un bus (1, 2) d'un système de bus qui conduit des informations et de l'énergie, le travail s'effectuant avec des impulsions actives (46) et des impulsions d'égalisation (47) lors de la transmission d'informations, avec une source de courant constant (3) pour des fréquences du message comme séparateur pour informations et énergie, laquelle source de courant constant travaille comme circuit régulateur pour des fréquences basses en relation avec un circuit de commande (5) qui fournit un signal (f (u Reg)) pour la commande de la source de courant constant (3), **caractérisé par le fait que** la commande de la source de courant constant (3) après l'impulsion active (46) s'effectue de telle sorte que le courant de source (50) en tant qu'impulsion d'égalisation est réduit de manière à simuler le courant de démagnétisation d'un transformateur.

2. Procédé selon la revendication 1, **caractérisé par le fait que** la simulation de l'impulsion d'égalisation d'un transformateur s'effectue au moyen d'un signal de commande (f (u C1)) qui est superposé au signal (f (u Reg)) destiné à la commande de la source de courant constant (3).

3. Coupleur de bus, qui travaille avec une impulsion active (46) et une impulsion d'égalisation (47), pour le couplage à un bus d'un système de bus conduisant des informations et de l'énergie, le coupleur de bus travaillant avec une source de courant constant (3) pour des fréquences du message comme séparateur pour informations et énergie, laquelle source de courant constant travaille comme circuit régulateur pour des fréquences basses en relation avec un circuit de commande (5), **caractérisé par le fait que** la commande de la source de courant constant (3) s'effectue par un circuit qui est conçu de telle sorte que, après l'impulsion active (46), le courant de source (50) en tant qu'impulsion d'égalisation est réduit de manière à simuler le courant de démagnétisation d'un transformateur.

4. Coupleur de bus selon la revendication 3, **caractérisé par le fait que**, dans la commande de la source de courant constant (3), à partir du circuit de commande (5), il est branché un circuit additionneur (40) qui reçoit aussi un signal de commande (- f (u C1)) provenant d'un dispositif (41) destiné à simuler l'impulsion d'égalisation.

5. Coupleur de bus selon la revendication 4, **caractérisé par le fait que** le dispositif (41) destiné à simuler l'impulsion d'égalisation est, quant à son action, un transistor (Q1) avec résistance d'émetteur (R1) et condensateur (C1) auquel un circuit de décharge (44) est associé, le signal de commande (f (u C1)) pouvant être prélevé au collecteur et une tension proportionnelle à la tension de bus étant envoyée à la base du transistor (Q1).

6. Coupleur de bus selon la revendication 4, **caractérisé par le fait que** le dispositif (41) destiné à simuler l'impulsion d'égalisation est, quant à son action, un transistor (Q1) avec résistance d'émetteur (R1) et condensateur (C1) au collecteur, un circuit de charge (44) étant branché en parallèle avec le condensateur (C1) et le signal de commande (f (u C1)) pouvant être prélevé entre le collecteur et le condensateur et la tension de bus (u) étant envoyée à la base du transistor (Q1).

7. Coupleur de bus selon la revendication 5 ou 6, **caractérisé par le fait que** le circuit de décharge (44) est conçu pour maintenir la charge du condensateur (C1) sur la moitié environ de la durée de l'impulsion active et pour décharger ensuite sensiblement sur la même durée.

**FIG 1**

EP 0 854 587 B1

FIG 2

FIG 3